# EUROPEAN PATENT SPECIFICATION

(11) **EP 1 832 095 B1**
(45) Date of publication and mention of the grant of the patent: **11.08.2010**
(21) Application number: 05814278.7
(22) Date of filing: 12.12.2005
(51) Int. Cl.: H04M 1/725, G06F 3/023, G06F 3/033

(54) **A MOBILE TERMINAL, AND ASSOCIATED METHODS, WITH IMPROVED USER INTERFACE**
MOBILES ENDGERÄT UND ASSOZIIERTE VERFAHREN MIT VERBESSERTER BENUTZEROBERFLÄCHE
TERMINAL MOBILE, ET PROCEDES ASSOCIES, A INTERFACE UTILISATEUR AMELIOREE

(30) Priority: 29.12.2004 US 25253
(43) Date of publication of application: 12.09.2007
(73) Proprietor: Nokia Corporation, 02150 Espoo (FI)
(72) Inventor: MÄKI, Nina, FIN-33980 Tampere (FI); KOSKINEN, Sanna, M., 33720 Tampere (FI); LINDROOS, Sanna, 37600 Valkeakoski (FI); HEIKKILÄ, Päivi, FIN-33500 Tampere (FI); PUSA, Juha, M., 36200 Kangasala (FI); KONKKA, Katja, FIN-33560 Tampere (FI)
(74) Representative: Khan, Mohammed Saiful Azam
(86) International application number: PCT/IB2005/003740
(87) International publication number: WO 2006/070236

(56) References cited:
- EP-A- 1 004 957
- EP-A- 1 179 944
- EP-A- 1 359 495
- US-A1- 2004 189 597

## Description

### Field of the Invention

The present invention relates to mobile telecommunication and more particularly to improvements in the user interface of a mobile terminal that has a multi-way input device such as a joystick.

### Background of the Invention

A mobile (cellular) telephone for a telecommunications system like GSM, UMTS, D-AMPS or CDMA2000 is a common example of a mobile terminal according to the above. For many years, the conventional user interface of mobile telephones were limited to a display, a keypad, a speaker and a microphone. As regards the keypad, it normally included an alpha-numeric or ITU-T type set of keys (characters "0"-"9", "*", "#", and a few other keys such as call handling keys for "Call"/"Yes" and "Hangup"/"No". In such conventional mobile terminals, essentially all non-acoustic user input was entered through the keypad (expect for certain specific control operations that were done through dedicated buttons, such and volume control buttons).

A keypad as described above has its limitations as regards user-friendliness. In older days, when a mobile terminal was used almost only for speech communication, an ITU-T type keypad sufficed for most users, since the required user interaction was essentially limited to the dialing of telephone numbers and call handling for generating outgoing calls and answering or rejecting incoming calls. Modern terminals, on the other hand, are used for many other purposes than merely speech communication; electronic messaging, recording of digital pictures or video, listening to FM radio or MP3 music, and electronic games being just a few examples of software applications that are typically used in a contemporary mobile terminal. For such applications, an ITU-T type keypad is clearly insufficient if used as the only input device in the mobile terminal.

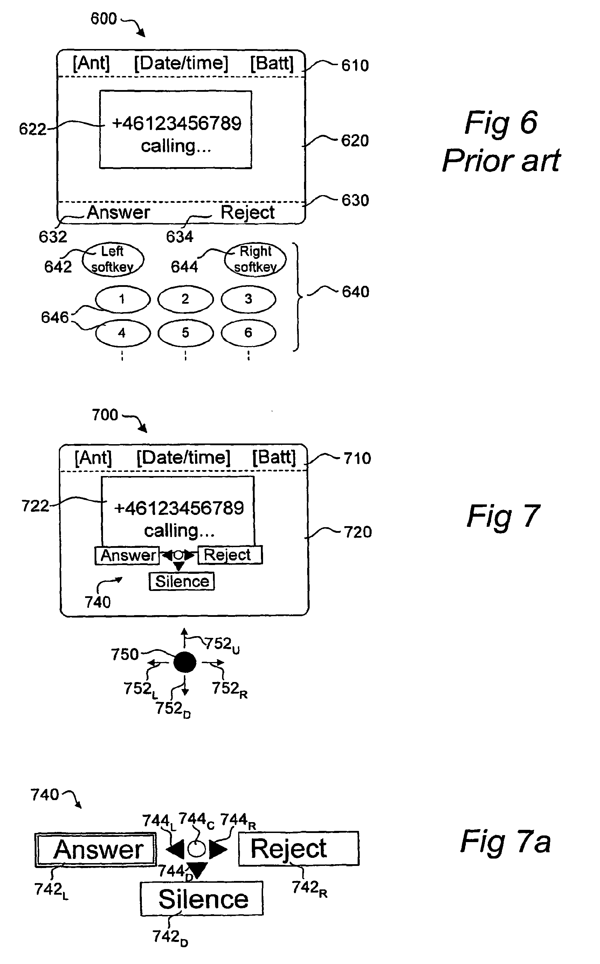

One popular way in the prior art to extend the usability of the user interface in a mobile terminal having an ITU-T type keypad has been to introduce soft keys into the user interface. Fig 6 gives a schematic illustration of a prior art mobile terminal having a user interface which includes a display 600 and an ITU-T type keypad 640. The latter includes conventional alpha-numeric hard keys 646 as well as left and right soft keys 642, 644. Here, to avoid any confusion, it is worth mentioning that a "soft key" is not soft in a physical sense but in a logical; a soft key can and will be assigned different functions in different contexts, so that it may have one meaning in a certain situation in an active application, a completely different meaning in another situation in the same application, and yet other meanings in other applications. The hard keys 646 are not harder than the soft keys in a physical sense but normally only has one meaning irrespective of application, e.g. the hard key labeled "1" represents the digit "1" both in call handling and a calendar application as well as in a calculator application.

In the exemplifying situation given in Fig 6, a status area 610 at the uppermost part of the display 600 presents general information that is not associated with a particular application, such as date/time, battery level and RSSI (Received Signal Strength Indicator). An incoming call is announced as a message 622 in a main presentation area 620. A lowermost area 630 of the display 600 shows respective text labels 632 and 634 which indicates the current function or meaning associated with soft keys 642 and 644, respectively. In another situation than handling of an incoming call, the soft key labels 632 and 634 will be assigned other functions, and consequently the text labels 632 and 634 will be updated to reflect this.

An ITU-T type keypad is not particularly advantageous for navigation and selection among information presented on the display. Since this is frequently required in the various applications available in a modern mobile terminal, it is known in the prior art to provide a mobile terminal with other kinds of input devices instead of or in addition to an ITU-T type keypad, such as a multi-way input device in the form of a joystick or 4-way/5-way navigation key. Such a multi-way input device is advantageous for two reasons: it is physically compact and therefore conforms well to modern demands for miniaturization, and it represents an intuitive and easily operated means for navigating and selecting among information presented on the mobile terminal's display. For instance, the Nokia® 7650 has, in addition to a retractable ITU-T keypad, a joystick placed between two soft keys. The joystick is used as a means for scrolling in lists and among user interface objects such as icons and menu items.

In recent years, some mobile terminal models have been introduced that have two displays. A primary, larger display is predominantly used for all user interaction in active operating modes, whereas a secondary, smaller display is used for certain indication of basic status information in idle mode. In some models, the primary display is a high-resolution color display, whereas the secondary display is an inexpensive monochrome display. This arrangement is typically used for a foldable or otherwise closable two-part mobile terminal having an open position where the primary display is available, and a closed position where only the secondary display is available. Hence, the primary display is used for all user interaction, including user input by way of an ITU-T keypad and/or a multi-way input device, whereas the secondary display is used for limited presentational purposes but not for user input. The primary display is sometimes of touch-sensitive type, which may be operated by way of a pen or stylus in a PDA (Portable/Personal Digital Assistant) manner.

EP1359495 discloses functions in a menu layer structure comprising a top menu layer and at least one lower menu layer wherein one of said at least one lower menu layer being as a bottom menu layer. The top menu layer is at least partly overlapping said lower menu layers. The user selects a menu layer to be provided as a top menu layer from said at least one lower menu layer by giving a first command, and selects a function to be performed from said top menu layer by giving a second command.

EP1179944 discloses a portable telephone having a display that displays a block indicative of an operator, predetermined information and a pointer. The operator can be operated in directions opposite to each other; and the controller controls the display so as to shift the pointer to a desirable position within predetermined information on a screen of the display in accordance with an operation of the operator and also displays a mark indicative of a direction to which the pointer can be shifted.

EP 1004957 discloses a portable terminal comprising a LCD display screen located on a control surface of a case for displaying thereon information according to the communication mode; a main soft key located below the LCD display screen with which can be rotated in a direction towards or away from the display screen as well as can be pressed; and a first auxiliary soft key located on the two sides of the main soft key which can be pressed.

US20040189597 discloses a wireless portable terminal comprising a first case and a second case which are interconnected by a hinge mechanism. The second case is closable to a first posture wherein a front surface of the first case is covered, and is openable to a second posture wherein the surface is exposed.

### Summary of the Invention

In view of the above, an objective of the invention is to solve or at least reduce the problems discussed above. In more particular, the present invention seeks to provide improvements to the user interface of a mobile terminal having a multi-way input device by extending the utilization of the multi-way input device to functions and situations not hitherto associated with such a device. Thus, one object is to facilitate use of the multi-way input device as a control means also for other actions than traditional navigation in the user interface. Another object is to allow the secondary display of a mobile terminal, which also has a primary display, to be used for more than just certain indication of basic status information in idle mode.

Generally, the above objectives are achieved by the attached independent patent claims.

A first aspect of the invention is a mobile terminal having a user interface formed by a controller, a display and a multi-way input device for navigating and selecting among information shown on said display, the mobile terminal comprising a plurality of software applications executable by said controller,
said user interface having a first state, in which a graphical indication of said multi-way input device is presented on said display, and a second state, in which graphical indications for at least some of said plurality of software applications are presented on said display;
said controller being adapted, in said first state, to detect a first predefined actuation of said multi-way input device, and in response switch to said second state;
said controller being adapted, in said second state, to provide for navigation and selection, by said multi-way input device, among the graphical indications presented for said at least some of said plurality of software applications, wherein a selection of one of said presented graphical indications activates an associated one of said at least some of said plurality of software applications.

As used herein, to "activate a software application" includes but is not limited to the following alternatives: launching an application under the control or supervision of the controller and/or the operating system in the mobile terminal; invoking an application by making a subroutine call from a current execution point such as a dedicated idle application, or an idle routine executed by the controller and/or the operating system, to the application to be activated; or activating the application by having the controller and/or the operating system transferring its state from a current background process status to a foreground process status.

In one embodiment, the mobile terminal has a primary display and a secondary display, the primary display being adapted for use in an active operating mode and/or in an open apparatus housing configuration, and the secondary display being adapted for use in an idle operating mode and/or in a closed apparatus housing configuration, wherein said first and second states of said user interface pertain to the secondary display and/or the idle operating mode.

In said second state, a graphical indication of said multi-way input device may be presented on said display in addition to said graphical indications presented for said at least some of said plurality of software applications. The graphical indications presented for said at least some of said plurality of software applications may be arranged in a two-dimensional matrix or grid, wherein said graphical indication of said multi-way input device is positioned at the center of the matrix or grid.

The controller may be adapted, in said second state, to detect a second predefined actuation of said multi-way input device, and in response switch to said first state. Both said first and said second predefined actuation of said multi-way input device may be a select operation.

The multi-way input device advantageously includes a joystick or a four-way/five-way navigation key. The mobile terminal may be a mobile phone adapted for use in a mobile telecommunications network.

A second aspect of the invention is a method of operating a user interface of a mobile terminal having a display and a multi-way input device for navigating and selecting among information shown on said display, the mobile terminal comprising a plurality of software applications, the method involving the steps of:
presenting on said display a plurality of graphical indications, each indication representing a respective one of at least some of said plurality of software applications;
detecting a selection by said multi-way input device of one of said indications; and
activating an associated software application which is represented by the selected indication.

"Activating a [...] software application" has the same meaning as explained above for the fourth aspect.

Said plurality of graphical indications may be distributed to different and mutually remote positions on a display area of the display. Each of said plurality of graphical indications may be a small graphical arrow that serves to indicate a respective navigation direction on said multi-way input device.

The method may involve the additional step of presenting a text label describing the associated software application adjacent to a respective one of said plurality of graphical indications. Said step of presenting a text label may be performed once the respective one of said plurality of graphical indications has been navigated to by said multi-way input device.

For a mobile terminal having a primary display and a secondary display, the steps of the method may be performed in an idle state of said mobile terminal, using said secondary display but not said primary display.

The multi-way input device may include a joystick or a four-way/five-way navigation key. In one embodiment, the multi-way input device and the display are part of a touch-sensitive display screen.

The mobile terminal may be a mobile phone adapted for use in a mobile telecommunications network.

Other objectives, features and advantages of the present invention will appear from the following detailed disclosure, from the attached dependent claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief Description of the Drawings

Embodiments of the present invention will now be described in more detail, reference being made to the enclosed drawings, in which:
Fig 1 is a schematic illustration of a telecommunication system, including a mobile terminal, a mobile telecommunications network and a couple of other devices, as an example of an environment in which the present invention may be applied.
Fig 2a is a schematic front view illustrating a mobile terminal according to a first embodiment, and in particular some external components that are part of a user interface towards a user of the mobile terminal.
Fig 2b is a schematic front view illustrating a mobile terminal according to a second embodiment.
Figs 3a and 3b are schematic perspective views illustrating a mobile terminal according to a third embodiment.
Figs 3c and 3d are schematic perspective views illustrating a mobile terminal according to a fourth embodiment.
Fig 4 is a schematic block diagram representing the internal component and software structure of a mobile terminal, which may be any one of the embodiments shown in Figs 2a-2b, 3a-3b or 3c-3d.
Fig 5 is a flowchart diagram that illustrates the operation of one embodiment to indicate the availability of certain joystick functionality in a given context, to detect selection of the functionality by actuation of the joystick, and to perform the functionality.
Fig 6 is a schematic illustration of the user interface of a mobile terminal of the prior art in the context of handling an incoming call, the user interface including an ITU-T type keypad with soft keys for which text labels are presented on the display.
Fig 7 is a schematic illustration of the user interface of a mobile terminal according to one embodiment in the same context as in Fig 6, the user interface including a joystick, different logical actions for call handling being associated with different physical actions on the joystick, and information being presented on the display to indicate the availability of each of these logical actions.
Fig 7a is an enlarged schematic view of the information presented on the display in Fig 7 to indicate the availability of the logical actions through associated physical actions on the joystick.
Figs 7b-7d are different schematic display snapshots, from different contexts, which give further examples of how information may be presented on the display to indicate the availability of logical actions through associated physical actions on the joystick.
Fig 7e is an enlarged schematic view of the information presented on the display in Fig 7d,
Fig 7f is an enlarged schematic view of information that alternatively may be presented for the same context as in Fig 7e.
Figs 8a-c illustrate an embodiment which supports easy software application invocation/launch/activation by way of a multi-input device starting from an idle screen of a mobile terminal.
Figs 9a-b illustrate another embodiment which supports easy software application invocation/launch/- activation by way of a multi-input device starting from an idle screen of a mobile terminal.

### Detailed Description of the Invention

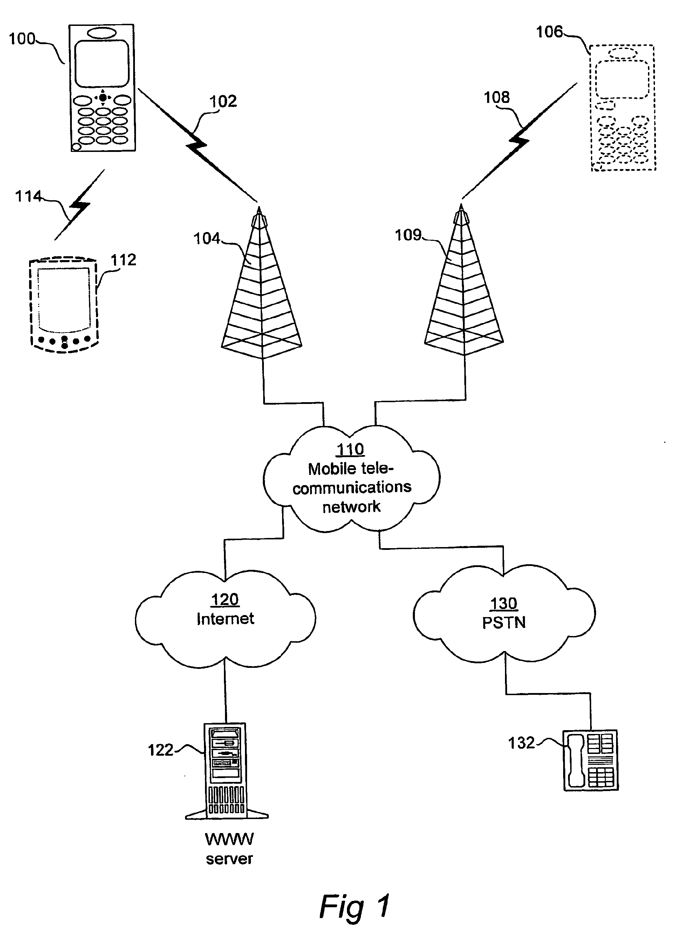

Fig 1 illustrates one example of a telecommunications system in which the invention may be applied. In the telecommunication system of Fig 1, various telecommunications services such as voice calls, data calls, facsimile transmissions, music transmissions, still image transmissions, video transmissions, electronic message transmissions and electronic commerce may be performed between a mobile terminal 100 according to the present invention and other devices, such as another mobile terminal 106, a PDA 112, a WWW server 122 and a stationary telephone 132. It is to be noticed that for different embodiments of the mobile terminal 100, different ones of the telecommunications services referred to above may or may not be available; the invention is not limited to any particular set of services in this respect.

The mobile terminals 100, 106 are connected to a mobile telecommunications network 110 through RF links 102, 108 via base stations 104, 109. The mobile telecommunications network 110 may be in compliance with any commercially available mobile telecommunications standard, such as GSM, UMTS, D-AMPS or CDMA2000.

The mobile telecommunications network 110 is operatively connected to a wide area network 120, which may be Internet or a part thereof. Various client computers and server computers, including WWW server 122, may be connected to the wide area network 120.

A public switched telephone network (PSTN) 130 is connected to the mobile telecommunications network 110 in a familiar manner. Various telephone terminals, including stationary telephone 132, are connected to the PSTN 130.

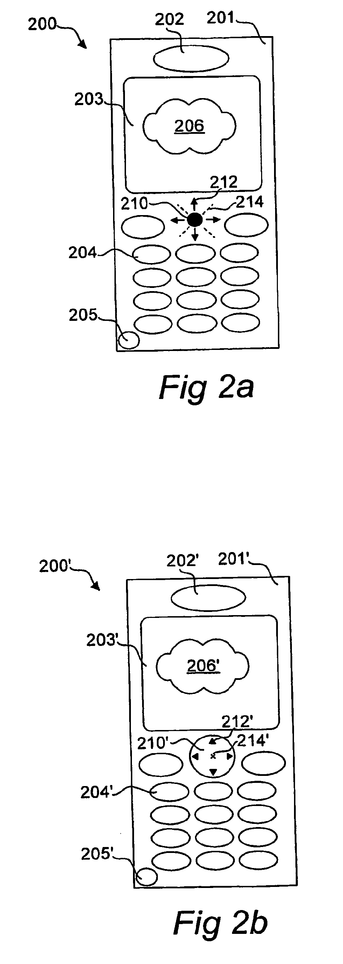

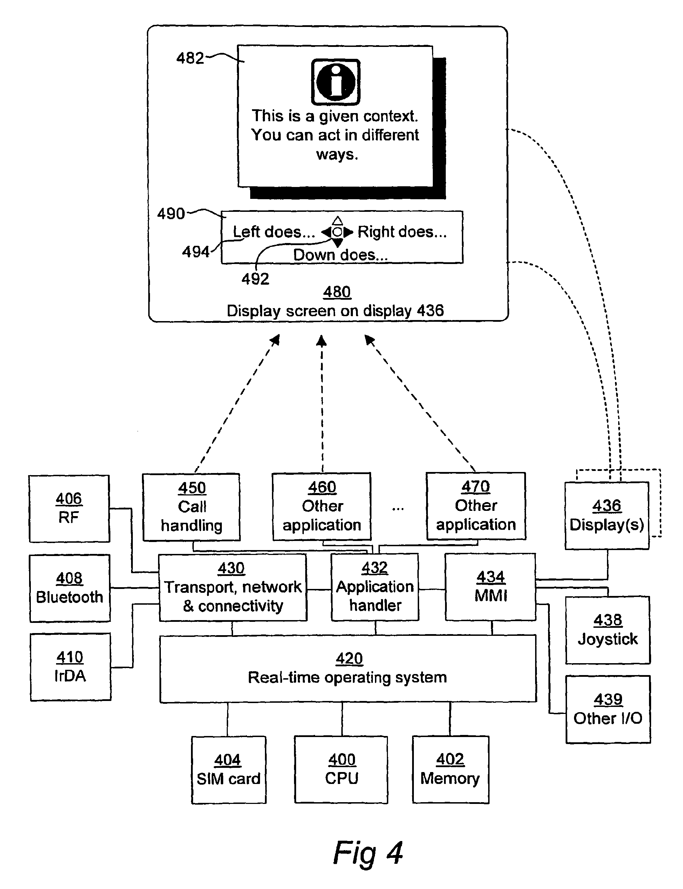

A first embodiment 200 of the mobile terminal 100 is illustrated in slightly more detail in Fig 2a. As is well known in the art, the mobile terminal 200 comprises an apparatus housing 201, a loudspeaker 202, a display 203, a set of keys 204 which may include a keypad of common ITU-T type (alpha-numerical keypad), and a microphone 205. In addition, but not shown in Fig 2a, the mobile terminal 200 comprises various internal components, the more important of which are illustrated in Fig 4 and will be described later. External components 202-205 are all part of the user interface of the mobile terminal.

Furthermore, the user interface involves a multi-way input device 210 in the form of a joystick, the handle of which may be actuated by the user in a plurality of directions 212/214 so as to command navigating operations, i.e. to navigate in corresponding directions among information 206 shown on display 203, in a manner which is conventional per se for joystick-equipped mobile terminals. The navigation directions may be 4 in number, as indicated by solid arrows 212 in Fig 2a, and may be distributed orthogonally in an "up, down, left, right" or "north, south, west, east" fashion with respect to a base plane which is essentially coincidental or parallel with the display 203 or the front surface of apparatus housing 201. Alternatively, the navigation directions may be 8 in number, as indicated by dashed lines 214 together with solid arrows 212 in Fig 2a, and may be distributed around a virtual circle in aforesaid base plane with successive 45° displacements, representing corresponding actuations of the joystick handle by the user.

The user may also perform a selecting operation among information 206 by actuating the joystick 210 in a direction perpendicular to the base plane, e.g. by depressing the joystick at its top. Depending on implementation, this will either cause displacement of the entire joystick handle, or will cause depression of a joystick select button. In some embodiments such a joystick select button may be located at the top of the joystick handle; in others it may be mounted next to the joystick handle on the base plane.

In accordance with the invention, broader usage of the multi-way input device than in the prior art is made possible by linking or associating, in a given context, physical actions on the multi-way input device (e.g. joystick actuations in the various navigation and selection directions) with logical actions in the user interface (e.g. call handling operations, or issuing commands and performing confirmations in software applications, etc). To the benefit of the user, the availability and meaning of such logical actions, selectable through associated physical actions on the multi-way input device, are indicated to the user on the mobile terminal display. An example of this is found in Fig 4, which moreover illustrates the mobile terminal's internal component and software structure.

In Fig 4, the availability and meaning of logical actions selectable through associated physical actions on a joystick 438 are indicated to the user by presenting information 490 on the display screen 480 of a display 436. The presented information 490 is dependent on context (situation), as represented by an information alert 482 on the display, and comprises explanatory text labels 494 which are shown grouped together in a spatial relationship on the display that reflects the corresponding spatial relationship between the associated physical actions on the joystick 438. For instance, the three logical actions that are associated with left, right and downward joystick actuation, respectively, may be indicated as three text labels shown to the left of, right of and below a joystick icon 492 on the display. More examples and a deeper description of this inventive aspect will be given later with reference to the remaining drawings.

Referring now to Fig 2b, a second embodiment 200' of the mobile terminal 100 is illustrated. In this embodiment, the multi-way input device is implemented as a 5-way navigation key 210' which is can be actuated (depressed) at different circumferential positions 212', that represent different navigation directions 212', so as to generate navigating operations in similarity with the description above for the embodiment of Fig 2a. Furthermore, a selecting operation may be commanded by depressing the 5-way key 210' at is center 214'. The other components 201'-205' are preferably identical with or equivalent to components 201-205 of Fig 2a.

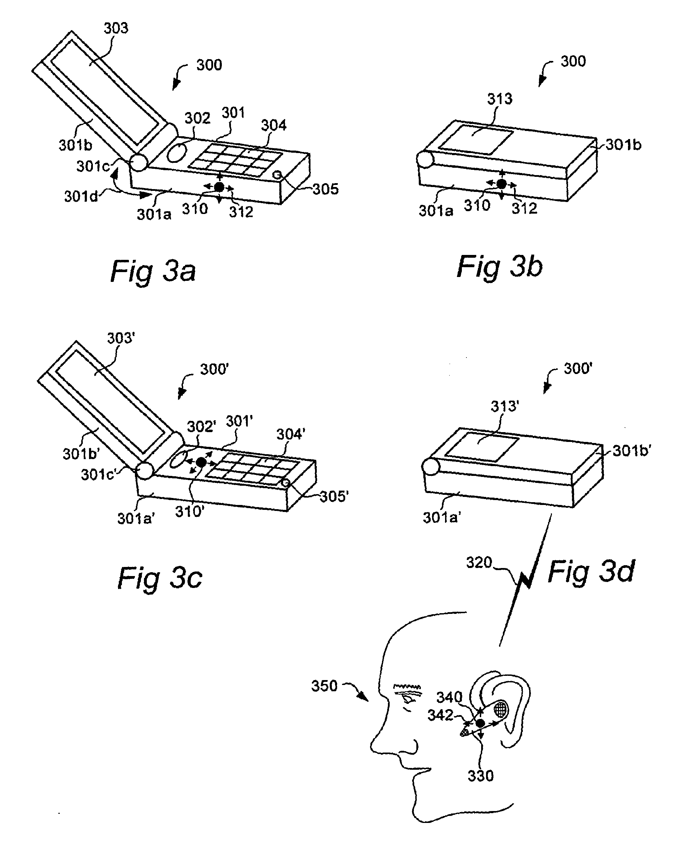

Figs 3a and 3b illustrate a third embodiment 300 of the mobile terminal 100. In contrast to the embodiments described above, this embodiment is foldable; the apparatus housing 301 is divided into two parts 301a and 301b which are pivotally interconnected at a hinge 301c. This arrangement allows use of the mobile terminal 300 in two different physical modes, an open mode as shown in Fig 3a and a closed mode as shown in Fig 3b, by turning the housing parts 301a-b to and from each other, as indicated by rotational arrow 301d.

The open mode, Fig 3a, offers maximum usability to the user, since all major user interface components are conveniently accessible: a large display 303 located on the inside of one housing part 301b, and a speaker 302, a set of keys 304 and a microphone 305 located on the inside of the other housing part 301a. In addition, a multi-way input device 310, here in the form of a joystick, is available at one side of housing part 301a and provides the user with an ability to command navigating and selecting operations, just like in the previously described embodiments. The open mode is advantageously used in a variety of contexts, including conventional call handling as well as various software applications.

The closed mode, on the other hand, represents a compact physical shape which is particularly advantageous for idle periods, for instance when the terminal 300 is stored in a pocket, bag, etc. In the closed mode, as seen in Fig 3b, the large display 303 and set of keys 304 (seen in Fig 3a) are protected from external influences and are also inaccessible to the user. However, a secondary, smaller display 313 is provided on the opposite side of housing part 301b, compared to the large primary display 303, and is therefore accessible for the user in the closed mode. The secondary display 313 may be used for presentation of idle or status information, such as date/time, battery level, RSSI, etc. In addition, thanks to the provision of the multi-way input device 310, which is accessible to the user also in the closed mode, some user interaction is possible even in the closed mode. Such user interaction may for instance include handling of incoming calls; by presenting a number of logical actions like "Answer", "Reject" and "Silence" in a certain spatial relationship on secondary display 313 and mapping these to corresponding physical actions on the multi-way input device 310, the user may conveniently handle the incoming call without unfolding the terminal 300 in order to access the conventional call handling keys among the set of keys 304. Again, more examples and a deeper description of this inventive aspect will be given later with reference to the remaining drawings.

A fourth embodiment 300' of the mobile terminal 100 is illustrated in Figs 3c and 3d. The fourth embodiment 300' resembles the third embodiment 300 of Figs 3a and 3b, except for the location of the multi-way input device 310'. The multi-way input device 310', implemented here as a joystick, is located on the inside of housing part 301a', between speaker 302' and set of keys 304'. Consequently, the multi-way input device 310' is accessible in the open mode but inaccessible in the closed mode. Nevertheless, the fourth embodiment may be adapted for some user interaction also in the closed mode, Fig 3d, by way of the secondary display 313' and an external input device 340, which is provided on an accessory 330. As seen in Fig 3d, a wireless handsfree unit 330 is connected to the mobile terminal 300' over a short-range wireless link 320. The link 320 is preferably established and maintained in accordance with any existing communication standard or protocol for short-range wireless data communication, including but not limited to any one of Bluetooth^{™}, WLAN, HomeRF and IrDA. The handsfree unit 330 is provided with a joystick 340 or another multi-way input device, and by actuating the joystick 340 in a desired direction 342, the user 350 may select and perform a logical action as presented on the secondary display 313'.

In an alternative to the embodiments disclosed above, the mobile terminal itself has no multi-way input device; such device is only provided on an accessory, like the joystick 340 on accessory 330 in Fig 3d. In another alternative, the availability of some other input means than a multi-way input device or a set of hard keys is indicated in the same or analogous way as has been described above, e.g. by presenting an explanatory text label for each logical action available through an associated physical action on such other input means. Voice activated control (VAC) is one example of such other input means for which the inventive approach may be applied.

The internal component and software structure of a mobile terminal according to one embodiment, which may be any of the afore-mentioned embodiments, will now be described with reference to Fig 4. The mobile terminal has a controller 400 which is responsible for the overall operation of the mobile terminal and is preferably implemented by any commercially available CPU ("Central Processing Unit"), DSP ("Digital Signal Processor") or any other electronic programmable logic device. The controller 400 has associated electronic memory 402 such as RAM memory, ROM memory, EEPROM memory, flash memory, or any combination thereof. The memory 402 is used for various purposes by the controller 400, one of them being for storing data and program instructions for various software in the mobile terminal. The software includes a real-time operating system 420, man-machine interface (MMI) drivers 434, an application handler 432 as well as various applications. The applications include a call handling application 450 as well as various other application 460-470, such as a contacts (phonebook) application, a messaging application, a calendar application, a control panel application, a camera application, a mediaplayer, one or more video games, a notepad application, etc.

The MMI drivers 434 cooperate with the or each display 436, the joystick 438 as well as various other I/O devices such as a microphone, a speaker, a vibrator, a keypad, a ringtone generator, an LED indicator, volume controls, etc. As is commonly known, a user may operate the mobile terminal through the man-machine interface thus formed.

The software also includes various modules, protocol stacks, drivers, etc., which are commonly designated as 430 and which provide communication services (such as transport, network and connectivity) for an RF interface 406, and optionally a Bluetooth interface 408 and/or an IrDA interface 410. The RF interface 406 comprises an internal or external antenna as well as appropriate radio circuitry for establishing and maintaining a wireless link to a base station (e.g. the link 102 and base station 104 in Fig 1). As is well known to a man skilled in the art, the radio circuitry comprises a series of analog and digital electronic components, together forming a radio receiver and transmitter. These components include, i.a., band pass filters, amplifiers, mixers, local oscillators, low pass filters, AD/DA converters, etc.

The mobile terminal also has a SIM card 404 and an associated reader. As is commonly known, the SIM card 404 comprises a processor as well as local work and data memory.

The call handling application 450 handles all contexts in conventional voice call handling, e.g. receiving, announcing or rejecting incoming calls, and generating outgoing calls. The call handling application 450 may also keep record of various call statistics.

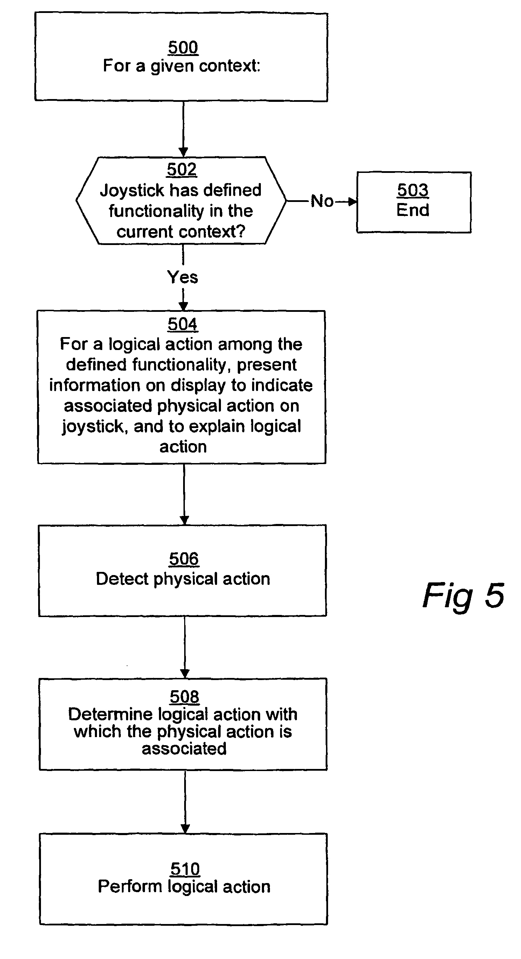

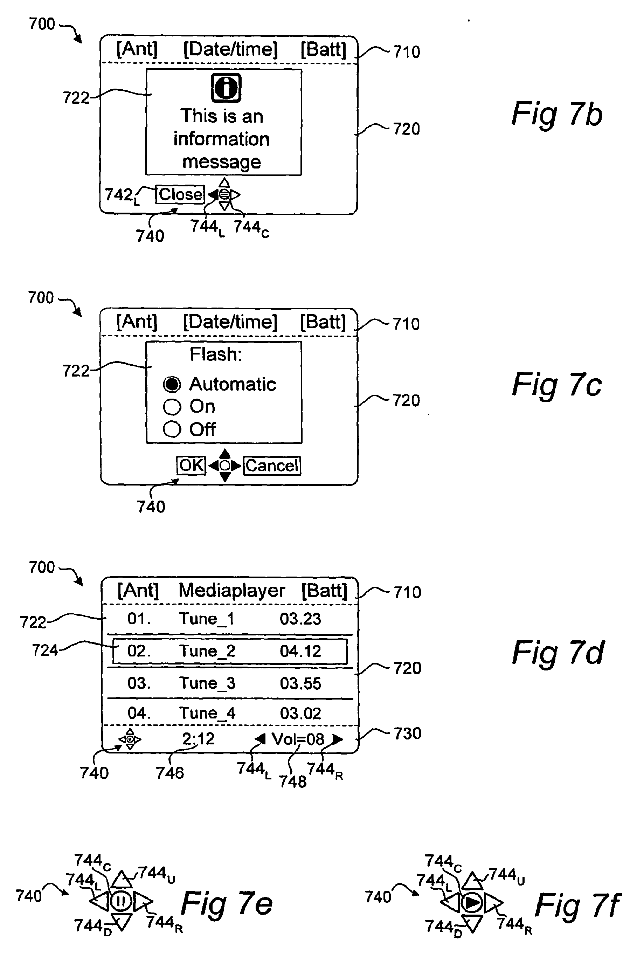

Fig 5 is a flowchart diagram that illustrates the operation of one embodiment to indicate the availability of certain joystick functionality in a given context, to detect selection of the functionality by actuation of the joystick, and to perform the functionality. The steps of the method shown in Fig 5 will be explained below with reference to one exemplifying context, which is shown in Fig 7 and which pertains to the handling of an incoming telephone call.

Thus, referring briefly to Fig 7 before turning to Fig 5, it is seen that a status area 710 is provided at the uppermost part of the display 700. The status area 710 presents general information that is not associated with a particular application, such as date/time, battery level and RSSI. An incoming call is announced as a pop-up message 722 in a main presentation area 720. This far, the display screen of Fig 7 resembles the one according to the prior art shown in afore-described Fig 6. In contrast to the prior art, however, available logical actions for call handling are not shown in a lowermost area of the display as text labels associated with soft keys (cf. reference numerals 630, 632, 634, 642 and 644 in Fig 6). Instead, the logical actions available are shown as information 740 next to the call announcement message 722. In more particular, as seen also in Fig 7a, this information 740 includes explanatory text labels 742_{L}, 742_{R}, 742_{D} which describe the logical actions "Answer", "Reject" and "Silence" that are available for handling the incoming call through associated physical actions 752_{L}, 752_{R}, 752_{D} on the joystick 750. The text labels 742_{L}, 742_{R}, 742_{D} are grouped together in a spatial relationship on the display 700 that reflects the corresponding spatial relationship between the associated physical actions on the joystick 750; therefore the user is given the information that the call may be answered, rejected and silenced, respectively, by actuating the joystick 750 to the left, right and downwards, respectively.

Thus, with reference again to Fig 5 as well as to Fig 4, for a given context 500, which may be the call handling situation shown in Fig 7, the following steps are performed. In step 502, it is checked through CPU 400, real-time operating system 420, application handler 423 and MMI drivers 434 whether the joystick 438 has a defined functionality in the current context, e.g. the call handling application 450. As is appreciated by those skilled in the art, such defined functionality may be embodied as predefined control data in the form of pieces of software code, i.e. program instructions and related control data, that are stored in memory 402 and are executable by CPU 400. If it is found in step 502 that the joystick has no defined functionality in the current context, the procedure is terminated in step 503. Otherwise, in step 504, for the logical action(s) included in the defined functionality (e.g. the answering, rejection and silencing of an incoming call), information is presented on the display to indicate the associated physical action(s), and their spatial relationship if applicable, as well as to explain the logical action(s) (e.g. by way of the text labels "Answer" (742_{L}), "Reject" (742_{R}) and "Silence" (742_{D}) of Fig 7a).

In step 506, physical actuation of the joystick 438 is detected by the MMI drivers 434 (e.g. an actuation of the joystick to the left (744_{L})). Step 508 determines the logical action (e.g. call answering) with which the detected physical action is associated. The logical action is performed in step 510. As used herein, performing a logical action relates to execution of a software function in the mobile terminal (e.g. invocation of a call answering subroutine in call handling application 450) upon selection by the joystick. In turn, performing this logical action will of course trigger performance of one or more other actions, in software as well as hardware (e.g. actions performed in modules 430 and 432, RF module 406 and in the mobile telecommunications network 110 to actually set up a call connection between the mobile terminal and the remote caller).

The information 740 shown to indicate available joystick functionality preferably includes a symbolic graphic representation of the joystick, such as a small arrow 744_{L} (etc), indicating each direction 752_{L} (etc) in which the joystick 750 may be actuated to cause selection of a respective logical action described by an adjacent text label 742_{L} (etc). The information 740 may also include a center circle 744_{C} to represent "joystick-select", i.e. a displacement of the joystick handle or depression of the joystick select button depending on implementation.

As seen in Fig 7a, a joystick direction that has a defined functionality (i.e., is associated with a logical action) in the current context may be shown as a solid arrow, whereas a joystick direction that has no defined functionality in the current context may be omitted from presentation (such as joystick-up in Fig 7a). Alternatively, as seen in Fig 7b, directional arrows may be shown for all four joystick directions, whereas an "available" direction (joystick-left) is shown as a solid arrow (744_{L}) and the "non-available" directions (joystick-right, joystick-up, joystick-down) are shown as empty arrows. As a further alternative, solid directional arrows may be shown for all joystick directions, even the currently non-available ones. In such an alternative, the available joystick directions will be indicated by the presence of their adjacent explanatory text labels; no explanatory text labels will be shown for non-available joystick directions.

When there are more than one available joystick direction, as is the case in Fig 7a, the preferred or default logical action among these may be highlighted. Highlighting is achieved in Fig 7a by presenting the explanatory text label 742_{L} for the preferred or default logical action within a double-lined frame, whereas the other text labels have a single-lined frame. The user may select this highlighted option by simply performing a "joystick-select" 744_{c} (e.g. pressing a joystick select button) or by pushing the joystick handle to the left and maintaining it in this direction 744_{L} for a predetermined time ("joystick-long"). The latter case may be viewed upon as the joystick equivalent of a conventional "long press" on a hard key in a keypad (such as long-pressing "1" to reach the voicemail box). Such highlighting of preferred or default logical action is advantageous not only in that it provides guidance to a novice user as regards the most common or safe action in a given context; it moreover minimizes the physical activity required for selecting and performing a certain logical action. If in a given context the user does not want the highlighted action to be performed, he may select any one of the other options available by moving the joystick handle in the desired direction and then either doing a "joystick select" 744_{C} or a "joystick-long".

It is possible to assign a logical action to the joystick select position 744_{C}, rather than merely serving to select logical actions represented by the joystick directions 744_{L}, 744_{R}, 744_{U}, 744_{D}. In Fig 7b, the joystick select position 744_{C} is given a iconized appearance, rather than a simple empty circle, and represents an Options action. Thus, upon "joystick-select", instead of executing the Close action 742_{L}, options available for further handling of the current context (as described by the information message 722) will be presented on the display 700. For instance, if the information message 722 alerts about an upcoming shortage of battery charge, the Options action may present and propose different ways in which the user may configure his mobile terminal to better preserve electric power in the future. If the information message 722 announces that the mobile terminal has just reached the mobile telecommunications network of a foreign network operator (e.g. when passing a border between two countries), the Options action may present a list of selectable alternatives such as searching for other and perhaps more familiar operators or presenting detailed information about the new operator. Of course, these are just two among virtually unlimited numbers of Options actions in different contexts.

Fig 7c presents an exemplifying context in a Camera application 460-470. Here, the main presentation area 720 contains a flash settings window 722 with a list of selectable radio buttons. The information 740 about available joystick functionality includes solid arrows for all four joystick directions. However, explanatory text labels are shown for only two of these; "OK" for joystick-left and "Cancel" for joystick-right. No text labels are shown for the available joystick-up and joystick-down, since their meaning will be intuitive anyway given the current context: they are used for scrolling up and down in the list of radio buttons in flash settings window 722. Selecting one of the radio buttons may be done automatically once that radio button is scrolled to by joystick-up/joystick-down, or it may be done by a joystick-select (actuation of the joystick center position).

Another exemplifying context is presented in Fig 7d. Here, a Mediaplayer application 460-470 is active. The main presentation area 720 contains a list 722 of music tunes on an available storage medium, and the currently playing tune 724 is shown surrounded by a frame. The lowermost area 730 of the display 700 contains local status information for the Mediaplayer application (in contrast to the status indication area 710 at the top which shows global status information). The local status information in area 730 includes a play time indicator 746 and a volume setting indicator 748. Moreover, the area 730 includes information 740 about available joystick functionality in the visual form of an iconized representation of a joystick. As seen more clearly in Fig 7e, the iconized joystick representation 740 includes four empty directional arrows 744_{L}, 744_{R}, 744_{U}, 744_{D} surrounding an iconized joystick center position 744_{C}. Since the directional arrows are shown as empty without any explanatory text label, they convey no information to the user about any available joystick directions; instead they are merely a part of the iconized joystick representation 740 which, as a whole, informs the user that the there is in fact some joystick functionality available in this context.

In more particular, this available joystick functionality is indicated by the iconized joystick center position 744_{C}. In Fig 7e, the iconized joystick center position 744_{C} represents a logical Pause action. In other words, a joystick-select in this context will pause the currently playing tune 724. Once the tune has been paused, the iconized joystick center position 744_{C} may change to another appearance, as shown in Fig 7f, and represent a logical Play action. Hence, performing a joystick-select in the context shown in Fig 7f will cause the tune 724 to start playing.

Optionally, as indicated in Fig 7e, the solid arrows 744_{L}, 744_{R} at either sides of the volume setting indicator 748 may in fact be included in the information 740 about available joystick functionality, even if they are shown separate from the iconized joystick representation at the lowermost left corner of the display 700. In other words, the solid arrows 744_{L}, 744_{R} will indicate and represent logical actions for lowering and increasing the current volume setting, respectively. They need no explanatory text labels, since their meaning is intuitive enough given their location next to the volume setting indicator 748. Even more intuitive is the meaning of joystick-up and joystick-down; these actions will scroll up and down in the list of 722 to change the currently playing tune 724. As appears from Fig 7e, these two available joystick actions are not at all indicated on the display 700.

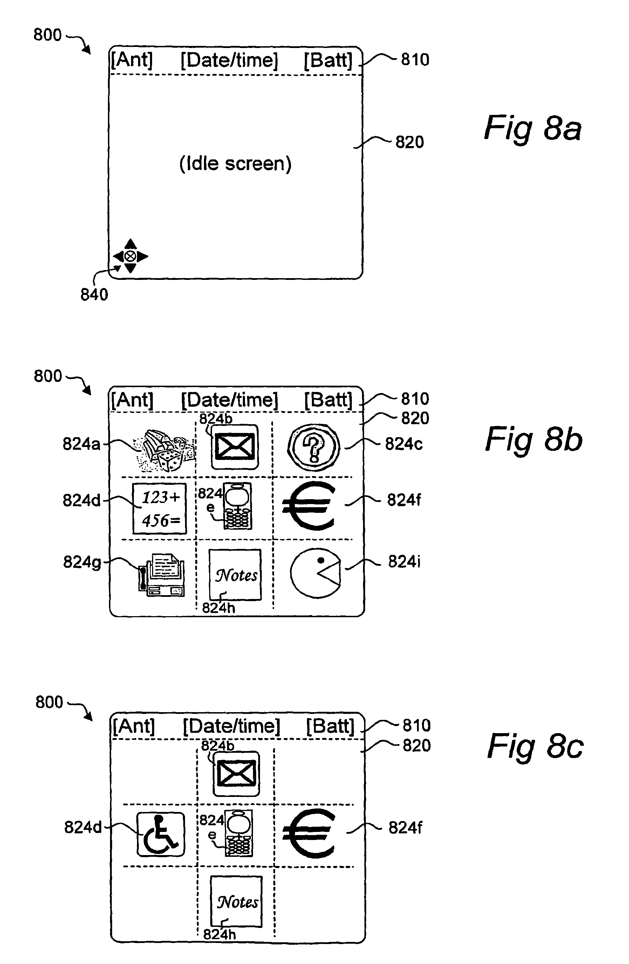

An embodiment will now be described, with reference to Figs 8a-c, in which the joystick is used for invoking, launching or activating software applications starting from an idle screen. This embodiment is particularly advantageous when implemented in a mobile terminal of the type shown in Figs 3a-3d, i.e. having a primary display as well as a smaller secondary display, the latter of which is used predominantly in idle mode when the housing of the mobile terminal is put in a compact position. In more particular, it will now be described how the joystick may be used in this idle mode to launch software applications from the secondary display 800 in Fig 8a.

As seen in Fig 8a, in the idle mode, the secondary display 800 basically displays nothing except for general status information in the status area 810. The background of the main presentation area 820 may be truly empty, as shown in Fig 8a, or may contain a background image or pattern. This far, the contents of the idle mode screen 800 resembles the ones known from the prior art. In addition, however, information 840 is shown at e.g. the lowermost left corner of the display 800 to indicate available joystick functionality. In Fig 8a, the information 840 has the form of a symbolic graphic representation of the joystick. By presenting this information 840, the user is alerted of the fact that, in contrast to prior art idle screens, the idle mode may in fact be operated by way of the joystick. More particularly, by performing a joystick-select operation, the user will cause a switch from a first state for display 800 shown in Fig 8a to a second state shown in Fig 8b.

When this switching of states occurs, the main presentation area is filled with a grid or matrix of icons for available software applications. In the example shown in Fig 8b, a dice game icon 824a, a messaging application icon 824b and a help application icon 824c are shown in a first row on display 800, a calculator icon 824d, a return-to-idle icon 824e and a money application icon 824f are shown in a second row on display 800, and a fax application icon 824g, a notes application icon 824h and a pacman game icon 824i are shown in a third row on display 800. Thus, eight software application icons 824abcd and 824fghi are centered around the return-to-idle icon 824e. If the user for some reason wants to return to the idle screen in Fig 8a, he simply performs a joystick-select. Otherwise, by actuating the joystick in a respective direction among 8 available directions (up, up-right, right, down-right, down, down-left, left, up-left), a respective application icon 824b, 824c, 824e, 824i, 824h, 824g, 824d and 824a may be selected. The selection of an icon may consist solely in pointing the joystick in the desired direction, or pointing in the desired direction followed by a highlighting of the desired icon and an affirmative joystick-select, or a combined operation of pointing in the desired direction and maintaining the actuation in that direction for a predetermined time (joystick-long). Upon selection of an icon, the software application associated with that icon will be invoked or launched, or activated if already executing in the background of the operating system, wherein that application will take command of the main presentation area 820 and fill it with application-specific contents. Since the joystick will likely be used for other purposes in the thus active application, a return to the idle screen may have to be performed through other means than the return-to-idle icon 824e, such as through selection of a certain menu item (e.g. "Exit").

Fig 8c illustrates an alternative to the embodiment described above. In this case, upon joystick-select in the idle screen and the following switch from the first state to the second state, the main presentation area 820 will show an application grid with four, not eight, cells, each of which may contain an application icon 824b, 824d, 824f, 824h. By actuating the joystick in different orthogonal directions (up, down, right, left), different ones of the application icons may be selected to invoke, launch or activate the associated application.

It is to be observed that the dashed lines in Fig 8 are merely for the purpose of illustrating the grid structure and may or may not be shown in a real case.

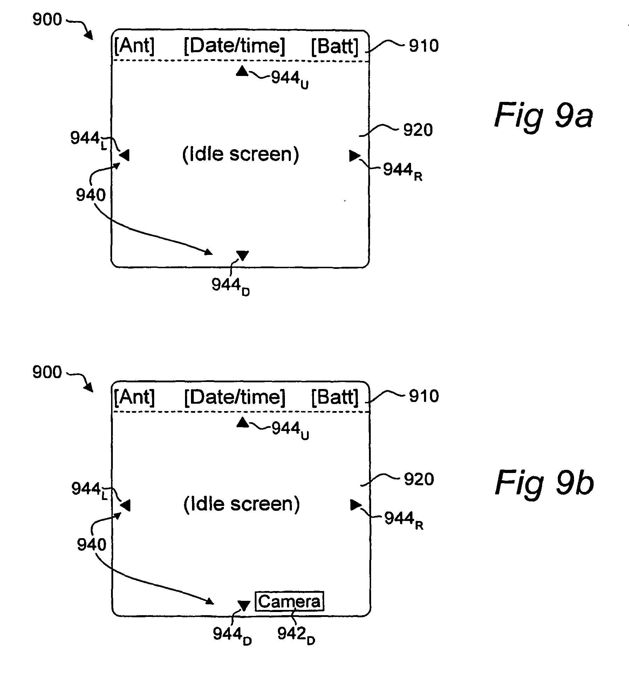

Another embodiment, in which a multi-way input device such as a joystick is used for invoking, launching or activating software applications starting from an idle screen, will now be described with reference to Figs 9a-b. As with the previously described embodiment, this embodiment is particularly advantageous when implemented in a mobile terminal having a primary display as well as a smaller secondary display. It will now be described how the joystick may be used in idle mode to launch software applications from the secondary display 900 in Fig 9a.

In the idle mode shown in Fig 9a, the secondary display 900 displays the general status information in the status area 910. The main presentation area 920 contains nothing except for information 940 which indicates available joystick functionality. In Fig 9a, the information 940 is divided into four arrows 944_{L}, 944_{R}, 944_{U}, 944_{D} which are distributed to four different remote positions on the display 900.

The arrows 944_{L}, 944_{R}, 944_{U}, 944_{D} represent the four joystick directions. Their presence on the display 900 alerts the user of the fact that, in contrast to prior art idle screens, the idle mode may in fact be operated by way of the joystick so as to launch, invoke or activate software applications. More particularly, each arrow is associated with a respective software application. In contrast to the previous embodiment, no application icons are shown. By actuating the joystick in a certain direction, the user will cause launch/invocation/activation of the associated software application.

Explanatory text labels may be shown next to the arrows 944_{L}, 944_{R}, 944_{U}, 944_{D} to increase the clarity for the user as regards which applications that are associated with the joystick directions. A trade-off between keeping a clean idle screen and giving some guidance to the user is shown in Fig 9b. Here, an explanatory text label 942_{D} is shown only once that joystick direction (joystick-down) has been actuated. Thus, the user may explore the meaning of the different arrows by actuating the joystick in different directions. A selected application may be affirmed by a joystick-select or a joystick-long, as has already been explained above for other embodiments.

Even if the embodiments described above and shown in Figs 8a-c and 9a-b, respectively, are particularly advantageous for use with a secondary display in a mobile terminal that also has a primary display, it is to be observed, however, that they are also applicable in mobile terminals which have a single, all-purpose display, or in fact in mobile terminals which have more than two displays.

It is to be noted that the different embodiments described above of how the information about available joystick functionality may be shown in different contexts are just examples. Many other combinations of and alternatives to the ways described above are possible within the spirit of the invention. Moreover, it is to be noted that a four-way/five-way navigation key may be used instead of a joystick as multi-way input device in any of the embodiments described above. Alternatively, particularly for the embodiment of Figs 9a-b, the multi-way input device may be a touch-sensitive display screen which is operated by pointing, clicking or tapping with a pen, stylus or finger, etc.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A mobile terminal having a user interface formed by a controller (400), a display (438; 800) and a multi-way input device (210; 210'; 310; 310'; 438; 750) for navigating and selecting among information shown on said display, the mobile terminal comprising a plurality of software applications (450-470) executable by said controller, **characterized by**
said user interface having a first state, in which a graphical indication (840) of said multi-way input device is presented on said display, and a second state, in which graphical indications (824) for at least some of said plurality of software applications are presented on said display (800);
said controller (400) being adapted, in said first state, to detect a first predefined actuation of said multi-way input device, and in response switch to said second state;
said controller being adapted, in said second state, to provide for navigation and selection, by said multi-way input device, among the graphical indications presented for said at least some of said plurality of software applications, wherein a selection of one of said presented graphical indications activates an associated one of said at least some of said plurality of software applications.

2. A mobile terminal as defined in claim 1, said mobile terminal (300, 300') having a primary display (303; 303') and a secondary display (313; 313'), wherein said first and second states of said user interface pertain to the secondary display.

3. A mobile terminal as defined in claim 2, the mobile terminal (300, 300') having an apparatus housing (301, 301'), the primary display (303; 303') being adapted for use in an active operating mode and/or in an open apparatus housing configuration, and the secondary display (313; 313') being adapted for use in an idle operating mode and/or in a closed apparatus housing configuration.

4. A mobile terminal as defined in any of claims 1-2, wherein, in said second state, a graphical indication of said multi-way input device is presented on said display in addition to said graphical indications presented for said at least some of said plurality of software applications.

5. A mobile terminal as defined in claim 4, wherein said graphical indications presented for said at least some of said plurality of software applications are arranged in a two-dimensional matrix and wherein said graphical indication of said multi-way input device is positioned at the center of the matrix.

6. A mobile terminal as defined in any of claims 1-5, wherein said controller is adapted, in said second state, to detect a second predefined actuation of said multi-way input device, and in response switch to said first state.

7. A mobile terminal as defined in any of claims 1-6, wherein said first predefined actuation of said multi-way input device is a select operation.

8. A mobile terminal as defined in claim 6, wherein said second predefined actuation of said multi-way input device is a select operation.

9. A mobile terminal as defined in any of claims 1-8, wherein the multi-way input device includes a joystick.

10. A mobile terminal as defined in any of claims 1-8, wherein the multi-way input device includes a four-way/five-way navigation key.

11. A mobile terminal as defined in any of claims 1-10, wherein the mobile terminal is a mobile phone (100; 200; 200'; 300; 300') adapted for use in a mobile telecommunications network (110).

12. A method of operating a user interface of a mobile terminal having a display (436; 800; 900) and a multi-way input device (210; 210'; 310; 310'; 438; 750) for navigating and selecting among information shown on said display, the mobile terminal comprising a plurality of software applications (450-470), the method involving the steps of:
presenting on said display a plurality of graphical indications (944), each indication representing a respective one of at least some of said plurality of software applications;
detecting a selection by said multi-way input device of one of said indications;
activating an associated software application which is represented by the selected indication;
wherein said plurality of graphical indications (944) are distributed to different and mutually remote positions on a display area (920) of the display (900); and
wherein each of said plurality of graphical indications is a small graphical arrow (944_{D}) that serves to indicate a respective navigation direction on said multi-way input device.

13. A method as defined in claim 12, involving the additional step of presenting a text label (942_{D}) describing the associated software application adjacent to a respective one (944_{D}) of said plurality of graphical indications.

14. A method as defined in claim 13, wherein said step of presenting a text label is performed once the respective one of said plurality of graphical indications has been navigated to by said multi-way input device.

15. A method as defined in any of claims 12-14, said mobile terminal (300, 300') having a primary display (303; 303') and a secondary display (313; 313'), wherein the steps of the method are performed in an idle state of said mobile terminal, using said secondary display but not said primary display.

16. A method as defined in any of claims 12-15, wherein the multi-way input device includes a joystick (210; 310; 310'; 750).

17. A method as defined in any of claims 12-15, wherein the multi-way input device includes a four-way/five-way navigation key (210').

18. A method as defined in claim any of claims 12-15, wherein the multi-way input device and the display are part of a touch-sensitive display screen.

19. A method as defined in any of claims 12-18, wherein the mobile terminal is a mobile phone (100; 200; 200'; 300; 300') adapted for use in a mobile telecommunications network (110).

20. The mobile terminal as defined in Claim 1, wherein the first state of the user interface is configured such that no graphical indications of plurality of software applications are presented.

21. The mobile terminal as defined in Claim 1, wherein the first state of the user interface is configured such that the graphical representation of the multi-way input device that is presented on the display is indicative of available multi-way input device functionality.

## Patentansprüche

1. Mobiles Endgerät mit einer Benutzerschnittstelle, die durch eine Steuerung (400), eine Anzeigevorrichtung (438, 800) und eine Mehrwegeeingabevorrichtung (210, 210', 310, 310', 438, 750) gebildet wird, um innerhalb von Informationen, die auf der Anzeigevorrichtung gezeigt werden, zu navigieren und unter ihnen auszuwählen, wobei das mobile Endgerät mehrere Softwareanwendungen (450-470) umfasst, die durch die Steuerung ausgeführt werden können,
**gekennzeichnet dadurch, dass**
die Benutzerschnittstelle einen ersten Zustand, in dem eine grafische Anzeige (840) der Mehrwegeeingabevorrichtung auf der Anzeigevorrichtung dargestellt wird, und einen zweiten Zustand aufweist, in dem grafische Anzeigen (824) für mindestens einige der mehreren Softwareanwendungen auf der Anzeigevorrichtung (800) dargestellt werden,
die Steuerung (400) eingerichtet ist, in dem ersten Zustand eine erste vorbestimmte Betätigung der Mehrwegeeingabevorrichtung zu erfassen, und in Reaktion darauf in den zweiten Zustand umzuschalten,
die Steuerung eingerichtet ist, in dem zweiten Zustand ein Navigieren innerhalb der und Auswählen unter den grafischen Anzeigen, die für die mindestens einigen der mehreren Softwareanwendungen dargestellt werden, durch die Mehrwegeeingabevorrichtung bereitzustellen, wobei ein Auswählen von einer der dargestellten grafischen Anzeigen eine zugehörige der mindestens einigen der mehreren Softwareanwendungen aktiviert.

2. Mobiles Endgerät nach Anspruch 1, wobei das mobile Endgerät (300, 300') eine primäre Anzeigevorrichtung (303, 303') und eine sekundäre Anzeigevorrichtung (313, 313') umfasst, und wobei der erste und der zweite Zustand der Benutzerschnittstelle die sekundäre Anzeigevorrichtung betreffen.

3. Mobiles Endgerät nach Anspruch 2, wobei das mobile Endgerät (300, 300') ein Gerätegehäuse (303, 303') umfasst, und wobei die primäre Anzeigevorrichtung (303, 303') zur Verwendung in einem aktiven Betriebsmodus und/oder in einer Konfiguration mit offenem Gerätegehäuse angepasst ist, und die sekundäre Anzeigevorrichtung (313, 313') zur Verwendung in einem Untätigkeits-Betriebsmodus und/oder in einer Konfiguration mit geschlossenem Gerätegehäuse angepasst ist.

4. Mobiles Endgerät nach einem der Ansprüche 1-2, wobei in dem zweiten Zustand zusätzlich zu den grafischen Anzeigen, die für die mindestens einigen der mehreren Softwareanwendungen dargestellt werden, eine grafische Anzeige der Mehrwegeeingabevorrichtung auf der Anzeigevorrichtung dargestellt wird.

5. Mobiles Endgerät nach Anspruch 4, wobei die grafischen Anzeigen, die für die mindestens einigen der mehreren Softwareanwendungen dargestellt werden, in einer zweidimensionalen Matrix angeordnet sind, und wobei die grafische Anzeige der Mehrwegeeingabevorrichtung in der Mitte der Matrix positioniert ist.

6. Mobiles Endgerät nach einem der Ansprüche 1-5, wobei die Steuerung eingerichtet ist, in dem zweiten Zustand eine zweite vorbestimmte Betätigung der Mehrwegeeingabevorrichtung zu erfassen, und in Reaktion darauf in den ersten Zustand umzuschalten.

7. Mobiles Endgerät nach einem der Ansprüche 1-6, wobei die erste vorbestimmte Betätigung der Mehrwegeeingabevorrichtung ein Auswahlvorgang ist.

8. Mobiles Endgerät nach Anspruch 6, wobei die zweite vorbestimmte Betätigung der Mehrwegeeingabevorrichtung ein Auswahlvorgang ist.

9. Mobiles Endgerät nach einem der Ansprüche 1-8, wobei die Mehrwegeeingabevorrichtung einen Joystick einschließt.

10. Mobiles Endgerät nach einem der Ansprüche 1-8, wobei die Mehrwegeeingabevorrichtung eine Vierwege-/Fünfwege-Navigationstaste einschließt.

11. Mobiles Endgerät nach einem der Ansprüche 1-10, wobei das mobile Endgerät ein mobiles Telefon (100, 200, 200', 300, 300') ist, das für die Verwendung in einem Mobil-Telekommunikationsnetzwerk (110) eingerichtet ist.

12. Verfahrern zum Bereiben einer Benutzerschnittstelle eines mobilen Endgeräts mit einer Anzeigevorrichtung (436, 800, 900) und einer Mehrwegeeingabevorrichtung (210, 210', 310, 310', 438, 750), um innerhalb von Informationen, die auf der Anzeigevorrichtung gezeigt werden, zu navigieren und unter ihnen auszuwählen, wobei das mobile Endgerät mehrere Softwareanwendungen (450-470) umfasst, wobei das Verfahren die Schritte beinhaltet:
- Darstellen mehrerer grafischer Anzeigen (944) auf der Anzeigevorrichtung, wobei jede Anzeige eine jeweilige der mindestens einigen Softwareanwendungen darstellt,
- Erfassen eines Auswählens einer der Anzeigen durch die Mehrwegeeingabevorrichtung,
- Aktivieren einer zugehörigen Softwareanwendung, die durch die ausgewählte Anzeige dargestellt wird,
- wobei die mehreren grafischen Anzeigen (944) auf verschiedene und voneinander entfernte Positionen auf einem Anzeigevorrichtungsbereich (920) auf der Anzeigevorrichtung (900) verteilt sind, und
- wobei jeder der mehren grafischen Anzeigen ein kleiner grafischer Pfeil (944_{D}) ist, der dazu dient, eine entsprechende Navigationsrichtung auf der Mehrwegeeingabevorrichtung anzuzeigen.

13. Verfahren nach Anspruch 12, beinhaltend den zusätzlichen Schritt des
- Darstellens eines die zugehörige Softwareanwendung beschreibenden Textfeldes (942_{D}) neben einer entsprechenden (944_{D}) der mehreren grafischen Anzeigen.

14. Verfahren nach Anspruch 13, wobei der Schritt des Darstellens eines Textfeldes ausgeführt wird, sobald mit der Mehrwegeeingabevorrichtung zu der entsprechenden der mehreren grafischen Anzeigen navigiert wurde.

15. Verfahren nach einem der Ansprüche 12-14, wobei das mobiles Endgerät (300, 300') eine primäre Anzeigevorrichtung (303, 303') und eine sekundäre Anzeigevorrichtung (313, 313') aufweist, wobei die Schritte des Verfahrens in einem Untätigkeits-Zustand des mobilen Endgeräts unter Verwendung der sekundären Anzeigevorrichtung, nicht jedoch der primären Anzeigevorrichtung (303, 303') durchgeführt werden.

16. Verfahren nach einem der Ansprüche 12-15, wobei die Mehrwegeeingabevorrichtung einen Joystick (210, 310, 310', 750) einschließt.

17. Verfahren nach einem der Ansprüche 12-15, wobei die Mehrwegeeingabevorrichtung eine Vierwege-/Fünfwege-Navigationstaste (210') einschließt.

18. Verfahren nach einem der Ansprüche 12-15, wobei die Mehrwegeeingabevorrichtung und die Anzeigevorrichtung Teil eines berührungsempfindlichen Anzeigeschirms sind.

19. Verfahren nach einem der Ansprüche 12-18, wobei das mobile Endgerät ein mobiles Telefon (100, 200, 200', 300, 300') ist, das zur Verwendung in einem Mobil-Telekommunikationsnetzwerk (110) eingerichtet ist.

20. Mobiles Endgerät nach Anspruch 1, wobei der erste Zustand der Benutzerschnittstelle so eingerichtet ist, dass keine grafischen Anzeigen von mehreren Softwareanwendungen dargestellt werden.

21. Mobiles Endgerät nach Anspruch 1, wobei der erste Zustand der Benutzerschnittstelle so eingerichtet ist, dass die grafische Darstellung der Mehrwegeeingabevorrichtung, die auf der Anzeigevorrichtung dargestellt wird, verfügbare Funktionalitäten der Mehrwegeeingabevorrichtung anzeigen.

## Revendications

1. Terminal mobile comportant une interface utilisateur formée par un dispositif de commande (400), un affichage (438 ; 800) et un dispositif d'entrée multidirectionnel (210 ; 210' ; 310 ; 310' ; 438 ; 750) pour naviguer et sélectionner parmi des informations représentées sur ledit affichage, le terminal mobile comprenant une pluralité d'applications logicielles (450 à 470) exécutables par ledit dispositif de commande, **caractérisé en ce que**
ladite interface utilisateur possède un premier état, dans lequel une indication graphique (840) dudit dispositif d'entrée multidirectionnel est présentée sur ledit affichage, et un second état, dans lequel des indications graphiques (824) pour au moins certaines parmi ladite pluralité d'applications logicielles sont présentées sur ledit affichage (800) ;
ledit dispositif de commande (400) est adapté, dans ledit premier état, pour détecter un premier actionnement prédéfini dudit dispositif d'entrée multidirectionnel, et, en réponse, passer audit second état ;
ledit dispositif de commande est adapté, dans ledit second état, pour permettre la navigation et la sélection, par l'intermédiaire dudit dispositif d'entrée multidirectionnel, parmi les indications graphiques présentées pour lesdites au moins certaines parmi ladite pluralité d'applications logicielles, dans lequel une sélection d'une desdites indications graphiques présentées active une application logicielle associée desdites au moins certaines parmi ladite pluralité d'applications logicielles.

2. Terminal mobile selon la revendication 1, ledit terminal mobile (300, 300') comportant un affichage primaire (303 ; 303') et un affichage secondaire (313 ; 313'), dans lequel lesdits premier et second états de ladite interface utilisateur concernent l'affichage secondaire.

3. Terminal mobile selon la revendication 2, le terminal mobile (300, 300') comportant un boîtier d'appareil (301, 301'), l'affichage primaire (303 ; 303') étant adapté pour être utilisé dans un mode de fonctionnement actif et/ou dans une configuration ouverte de boîtier d'appareil, et l'affichage secondaire (313 ; 313') étant adapté pour être utilisé dans un mode de fonctionnement inactif et/ou dans une configuration fermée de boîtier d'appareil.

4. Terminal mobile selon une quelconque des revendications 1 et 2, dans lequel, dans ledit second état, une indication graphique dudit dispositif d'entrée multidirectionnel est présentée sur ledit affichage en plus desdites indications graphiques présentées pour lesdites au moins certaines parmi ladite pluralité d'applications logicielles.

5. Terminal mobile selon la revendication 4, dans lequel lesdites indications graphiques présentées pour lesdites au moins certaines parmi ladite pluralité d'applications logicielles sont agencées dans une matrice bidimensionnelle et dans lequel ladite indication graphique dudit dispositif d'entrée multidirectionnel est positionnée au centre de la matrice.

6. Terminal mobile selon une quelconque des revendications 1 à 5, dans lequel ledit dispositif de commande est adapté, dans ledit second état, pour détecter un second actionnement prédéfini dudit dispositif d'entrée multidirectionnel, et, en réponse, passer audit premier état.

7. Terminal mobile selon une quelconque des revendications 1 à 6, dans lequel ledit premier actionnement prédéfini dudit dispositif d'entrée multidirectionnel est une opération de sélection.

8. Terminal mobile selon la revendication 6, dans lequel ledit second actionnement prédéfini dudit dispositif d'entrée multidirectionnel est une opération de sélection.

9. Terminal mobile selon une quelconque des revendications 1 à 8, dans lequel le dispositif d'entrée multidirectionnel comprend une manette de commande.

10. Terminal mobile selon une quelconque des revendications 1 à 8, dans lequel le dispositif d'entrée multidirectionnel comprend une touche de navigation à quatre directions/cinq directions.

11. Terminal mobile selon une quelconque des revendications 1 à 10, dans lequel le terminal mobile est un téléphone mobile (100 ; 200 ; 200' ; 300 ; 300') adapté pour être utilisé dans un réseau de télécommunications mobiles (110).

12. Procédé de fonctionnement d'une interface utilisateur d'un terminal mobile comportant un affichage (436 ; 800 ; 900) et un dispositif d'entrée multidirectionnel (210 ; 210' ; 310 ; 310' ; 438 ; 750) pour naviguer et sélectionner parmi des informations représentées sur ledit affichage, le terminal mobile comprenant une pluralité d'applications logicielles (450 à 470), le procédé comprenant les étapes consistant à :
présenter, sur ledit affichage, une pluralité d'indications graphiques (944), chaque indication représentant une application logicielle respective d'au moins certaines parmi ladite pluralité d'applications logicielles ;
détecter une sélection, par ledit dispositif d'entrée multidirectionnel, d'une desdites indications ;
activer une application logicielle associée qui est représentée par l'indication sélectionnée ;
dans lequel ladite pluralité d'indications graphiques (944) sont distribuées à des positions différentes et mutuellement éloignées sur une zone d'affichage (920) de l'affichage (900) ; et
dans lequel chacune parmi ladite pluralité d'indications graphiques est une flèche graphique de petite taille (944_{D}) qui sert à indiquer une direction de navigation respective sur ledit dispositif d'entrée multidirectionnel.

13. Procédé selon la revendication 12, comprenant l'étape supplémentaire consistant à présenter une étiquette textuelle (942_{D}) décrivant l'application logicielle associée adjacente à une indication graphique respective (944_{D}) parmi ladite pluralité d'indications graphiques.

14. Procédé selon la revendication 13, dans lequel ladite étape consistant à présenter une étiquette textuelle est réalisée une fois que ledit dispositif d'entrée multidirectionnel a navigué jusqu'à l'indication graphique respective parmi ladite pluralité d'indications graphiques.

15. Procédé selon une quelconque des revendications 12 à 14, ledit terminal mobile (300, 300') comportant un affichage primaire (303 ; 303') et un affichage secondaire (313 ; 313'), dans lequel les étapes du procédé sont réalisées dans un état inactif dudit terminal mobile, en utilisant ledit affichage secondaire et non ledit affichage primaire.

16. Procédé selon une quelconque des revendications 12 à 15, dans lequel le dispositif d'entrée multidirectionnel comprend une manette de commande (210 ; 310 ; 310' ; 750).

17. Procédé selon une quelconque des revendications 12 à 15, dans lequel le dispositif d'entrée multidirectionnel comprend une touche de navigation à quatre directions/cinq directions (210').

18. Procédé selon l'une quelconque des revendications 12 à 15, dans lequel le dispositif d'entrée multidirectionnel et l'affichage font partie d'un écran d'affichage tactile.

19. Procédé selon la revendication une quelconque des revendications 12 à 18, dans lequel le terminal mobile est un téléphone mobile (100 ; 200 ; 200' ; 300 ; 300') adapté pour être utilisé dans un réseau de télécommunications mobiles (110).

20. Terminal mobile selon la revendication 1, dans lequel le premier état de l'interface utilisateur est configuré de sorte qu'aucune indication graphique parmi la pluralité d'applications logicielles n'est présentée.

21. Terminal mobile selon la revendication 1, dans lequel le premier état de l'interface utilisateur est configuré de sorte que la représentation graphique du dispositif d'entrée multidirectionnel qui est présentée sur l'affichage soit indicative d'une fonctionnalité de dispositif d'entrée multidirectionnel disponible.
